# FASCICULE DE BREVET EUROPEEN

(11) **EP 4 154 181 B1**
(45) Date de publication et mention de la délivrance du brevet: **30.07.2025**
(21) Numéro de dépôt: 21734179.1
(22) Date de dépôt: 19.05.2021
(51) Int. Cl.: G06K 19/077, G06K 19/10, H05K 1/02

(54) **PROCÉDÉ DE RÉALISATION D'UN MODULE ÉLECTRONIQUE POUR CARTE À PUCE AVEC MOTIFS DE SÉCURITÉ**
VERFAHREN ZUR HERSTELLUNG EINES ELEKTRONISCHEN MODULS FÜR EINE CHIPKARTE MIT SICHERHEITSMUSTERN
METHOD FOR PRODUCING AN ELECTRONIC MODULE FOR A SMART CARD WITH SECURITY PATTERNS

(30) Priorité: 20.05.2020 FR 2005241
(43) Date de publication de la demande: 29.03.2023
(73) Titulaire: Smart Packaging Solutions, 13790 Rousset (FR)
(72) Inventeur: FABRIZIO, Kevin, 13790 Rousset (FR); CHARRIE, Dominique, 13790 Rousset (FR)
(74) Mandataire: Tranvouez, Edern Morgan
(86) Numéro de dépôt international: PCT/FR2021/000053
(87) Numéro de publication internationale: WO 2021/234229

(56) Documents cités:
- EP-A1- 2 350 929
- EP-A1- 2 533 175
- EP-B1- 2 350 929
- EP-B1- 2 533 175
- WO-A1-2005/027020
- FR-A1- 2 777 506

## Description

L'invention concerne les modules microélectroniques, notamment pour cartes à puce, présentant un bornier de contacts métalliques sur l'une de leurs faces. Il peut s'agir d'un module pour une carte à puce à contact au format ISO 7816-1, ou pour une carte à puce mixte comportant une antenne et fonctionnant aussi bien en mode à contact avec un lecteur à contacts, qu'en mode sans contact avec un lecteur distant. A titre d'exemple non limitatif, l'invention s'applique notamment aux modules électroniques pour cartes d'identification comportant un logo de sécurité.

Mais l'invention est indépendante de la taille du support, et le module peut être utilisé aussi bien pour des cartes à puce classiques que pour d'autres documents sécurisés pourvus d'un module électronique à contacts, tels que des passeports électroniques par exemple, de sorte que pour simplifier l'exposé, on désignera par le même vocable de « cartes à puce », aussi bien les cartes à puce au format habituel (selon la norme ISO 7816-1), que les documents de sécurité ayant un autre format mais étant également pourvus d'un module électronique du type de ceux habituellement utilisés dans les cartes à puce au format précité.

### ETAT DE LA TECHNIQUE

On connaît déjà dans l'état de la technique plusieurs types de cartes à puce pourvus d'un motif de sécurité sur le corps de carte ou sur la surface du module électronique de la carte.

En effet, il est souhaitable depuis plusieurs années de pourvoir les cartes à puce d'identité à contact d'un graphisme de sécurité recouvrant la face supérieure du corps de carte et permettant de détecter ou limiter les cas de fraude, mais on a constaté qu'un tel graphisme de sécurité n'est pas aisé à réaliser sur les modules eux-mêmes, car la conductivité des contacts du module risque d'être compromise.

Afin de résoudre en partie ce problème, le document DE - 196 25 466 C1 a décrit une carte à puce à fonctionnement par contact avec les contacts correspondants d'un lecteur, les contacts du module étant eux-mêmes pourvus d'un graphisme, notamment d'une couleur spécifique différente de la couleur dorée ou argentée habituelle. A cet effet, les contacts sont revêtus d'une couche de dispersion métallique contenant des particules de couleurs à base d'aluminium. Cependant, les contacts restent électriquement accessibles ce qui permet des cas de fraude par attaque du circuit de la puce à travers les contacts de la carte à puce. En outre, les contacts et le module restent physiquement également accessibles et assez faciles à répliquer avec les technologies actuelles, ce qui permet d'envisager de prélever et de remplacer le module électronique.

On connait également de par le document US 6 259 035 B1 une carte à puce à contacts dans laquelle on a cherché à rendre le module électronique et les contacts métalliques aussi discrets que possible dans leur apparence, en colorant les contacts eux-mêmes et en faisant en sorte que le graphisme de la surface du module soit un prolongement du graphisme du corps de carte.

Une approche inverse a encore été poursuivie dans le document US 5 552 574 qui décrit au contraire la façon de pourvoir la surface des contacts d'une carte à puce à contacts, avec une gravure de sécurité, réalisée à l'aide d'un rayon laser.

Il résulte des exemples précédents que le problème des marquages sécuritaires a été abordé pour les cartes à contacts, soit par des guilloches ou autres graphismes réalisés sur le corps de carte, soit par une altération graphique des contacts métalliques du module, sous forme de couleurs ou de gravure laser réalisés directement sur les contacts.

On connait par ailleurs de par le document FR 2 777 506 A1 un procédé de réalisation d'une entité décorative sur une carte à puce, comportant des plages de contact situées sur un module électronique et des plaques de formes quelconques complémentaires des plages de contact du module pour former une entité décorative. Ce procédé est donc à visée purement décorative et n'est pas utilisé à des fins de sécurité de la carte à puce contre la fraude.

Dans le domaine de la lutte contre la fraude, on connait de par le document EP 2 350 929 A1 un procédé consistant à réaliser une multitude de trous débouchant à travers le corps de carte et le module, de façon à rendre plus difficile de désassemblage de la carte et le remontage avec un module ou un corps de carte contrefait.

Dans le même esprit, le document WO 2005/027020 A1 décrit un module pour carte à puce dont les connecteurs comportent un ou plusieurs micro trous non visibles à l'œil nu mais pouvant être observés avec un grossissement suffisant. Cela suppose des manipulations particulières incompatibles avec des transactions rapides. En outre, les micro trous sont réalisés dans des zones fonctionnelles des connecteurs et risquent d'interférer avec le lecteur de carte à puce.

Le document EP 2 533 175 A1 décrit une carte à puce dont le module comporte, en plus des contacts électriques, une image imprimée. Celle-ci peut être imprimée partiellement sur le module et partiellement sur le corps de carte, afin de faciliter la détection d'une fraude par enlèvement du module.

Pour fabriquer des cartes à puce, il est généralement préférable d'utiliser des procédés de fabrication fiables et à rendement élevé, comme le procédé classique d'encartage utilisé pour les cartes à contact, consistant à reporter un module à contact dans une cavité du corps de la carte. Mais ce procédé en tant que tel présente une sécurité faible puisque les cartes ainsi fabriquées sont particulièrement exposées à la fraude consistant à arracher le module de la carte, ce qui est particulièrement contre-indiqué pour des cartes ou documents destinés à des applications de contrôle d'identité.

### BUT de L'INVENTION

Un but de la présente invention est par conséquent de proposer un procédé de réalisation de motifs de sécurité sur un module électronique pour document de sécurité, tel que décrit dans la revendication 1, afin de remédier aux inconvénients précités.

En particulier, un but de la présente invention est de proposer un procédé de réalisation d'un module pour carte à puce destiné à des applications de type contrôle d'identité, qui soit plus sécurisé tout en étant plus aisé à fabriquer par le fabricant officiel avec des rendements élevés et des coûts faibles.

Un autre but de la présente invention est de permettre la réalisation de graphismes de sécurité tels que des logos ou d'autres motifs de sécurité directement sur la surface apparente du module, pour rendre plus difficile la modification ou le remplacement du module électronique dans le cadre d'une tentative de fraude.

### OBJET DE L'INVENTION

A cet effet, l'invention a pour objet un procédé de réalisation de motifs de sécurité sur un module électronique pour document de sécurité, comportant des étapes consistant à :
- Approvisionner un film diélectrique;
- Réaliser des orifices traversants dans le film diélectrique;
- Déposer au moins une couche métallique sur la face supérieure et la face inférieure du film diélectrique en laissant ouverts lesdits orifices;
- Délimiter par gravure d'une part un ensemble de zones métalliques fonctionnelles comportant une zone centrale formant masse électrique et un ensemble de contacts électriques séparés entre eux et séparés de la masse électrique par des zones non métallisées laissant apparaître le film diélectrique, et d'autre part un ensemble de zones non fonctionnelles ou décoratives ;
- caractérisé en ce qu'il comporte une étape consistant à réaliser simultanément par une opération de gravure un premier motif de sécurité en creux obtenu par enlèvement de matière dans l'une desdites zones métalliques fonctionnelles, et un second motif de sécurité en relief par rapport au film diélectrique et obtenu par enlèvement de matière dans une zone située en dehors desdites zones métalliques fonctionnelles formant les contacts électriques du bornier.

Selon un mode de réalisation du procédé, ledit premier motif de sécurité est réalisé dans la zone centrale formant masse électrique.

Selon un mode de réalisation du procédé, ledit premier motif de sécurité est réalisé par une étape de gravure photochimique enlevant ladite au moins une couche métallique pour faire apparaitre en creux les contours dudit premier motif de sécurité sur le film diélectrique.

Selon un mode de réalisation du procédé, ledit second motif de sécurité est obtenu par gravure photochimique enlevant localement ladite au moins une couche métallique pour faire apparaître en relief les contours dudit second motif de sécurité sur le film diélectrique en dehors desdites zones fonctionnelles.

Selon un mode de réalisation, le procédé selon l'invention comporte une étape complémentaire de dépôt électrolytique d'au moins une couche métallique supplémentaire d'argent, d'or, de nickel ou de palladium.

### DESCRIPTION DETAILLEE

D'autres caractéristiques et avantages de l'invention apparaîtront à la lecture de la description détaillée et des dessins annexés dans lesquels :
- les figures 1A et 1B représentent respectivement une vue en coupe et en plan d'un module pour carte à puce à contact dont la surface apparente comporte au moins deux éléments de sécurité graphique selon l'invention ;
- les figures 2A à 2D représentent des vues en coupe et en plan d'un module pour carte à puce à différents stades du procédé de fabrication d'un module selon l'invention.

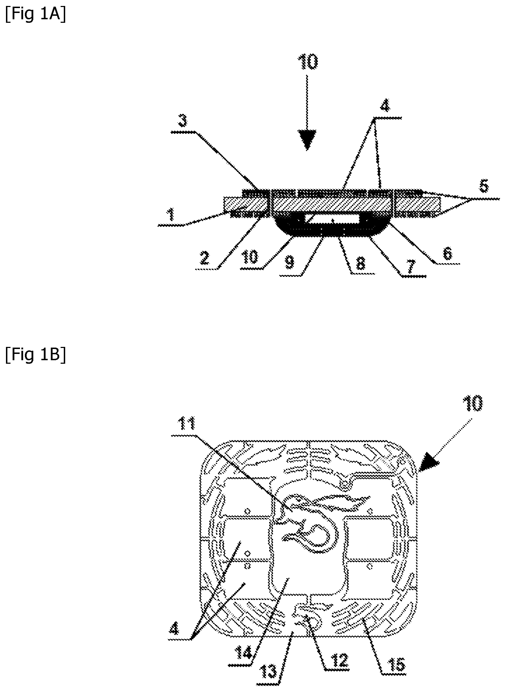

On se réfère à la figure 1. Dans cette figure, on a représenté en vue en coupe en figure 1A et en vue en plan en figure 1B un module électronique 10 selon l'invention. Il comporte un film diélectrique 1 pourvu sur sa face inférieure d'une puce microélectronique 8 protégée par une goutte de résine d'encapsulation 9. Les bornes d'entrée/sortie de la puce microélectronique 8 sont connectées par des fils conducteurs 7 à des plages de contact métalliques 6. Le film diélectrique 1 comporte sur sa face supérieure au moins une couche métallique présentant un ensemble de zones métalliques formant un bornier de contacts électriques 4,14 séparés par des zones non métallisées 13 laissant apparaître localement la face supérieure du film diélectrique 1. Dans le cas d'un module pour carte à puce, les contacts électriques 4,14 du bornier sont par exemple des contacts normalisés selon la norme ISO 7816.

Les plages de contact 6 de la face inférieure du module sont reliées à des contacts électriques 4,14 du bornier par des orifices 2 électriquement conducteurs, par exemple des vias traversant le film diélectrique 1 de part en part. Cette construction de module électronique est connue en tant que telle. Elle permet de reporter le module 10 dans une cavité d'un support tel qu'un corps de carte à puce, en laissant apparente la face supérieure du module, portant les contacts 4,14.

Afin d'augmenter la sécurité du produit final, il est connu de marquer la face supérieure avec un marquage de sécurité attestant de son origine, par exemple une gravure dans la zone métallique centrale 14, correspondant à un léger enlèvement de matière métallique révélant une forme ou un logo correspondant au fabricant ou à l'émetteur de la carte à puce portant le module. Le marquage ainsi réalisé correspond à un motif en creux dans la zone des contacts du bornier, typiquement dans la zone centrale 14 du bornier correspondant à la masse électrique du module.

Or il demeure assez aisé avec les outils actuellement disponibles, de contrefaire de tels marquages à postériori, pour obtenir un module frauduleux. La fraude se fait typiquement par gravure laser, or le laser ne permet pas de rajouter un motif par rajout de matière.

Afin de remédier à ce problème, l'invention prévoit de réaliser un second motif de sécurité graphique sur la surface du module, à l'extérieur de la zone des contacts électriques 4,14, à savoir dans une zone non fonctionnelle comportant des éléments métalliques 15 non fonctionnels, purement décoratifs. Ces éléments métalliques 15 sont interconnectés entre eux et avec la masse électrique 14 du module. Ils constituent des éléments métalliques résiduels, en relief par rapport à la surface du film diélectrique 1. L'invention prévoit donc d'utiliser un ou plusieurs de ces éléments métalliques décoratifs 15 pour réaliser un second motif de sécurité graphique 12, en relief par rapport au film diélectrique.

Plusieurs options existent pour faire comprendre par un simple examen visuel qu'il s'agit d'un second motif de sécurité 12 complémentaire du premier motif de sécurité 11. Il suffit pour cela que la forme en relief du second motif de sécurité 12 soit identique ou complémentaire, à un facteur d'échelle près, à la forme du premier motif de sécurité 11. Il peut alors s'agir d'un logo, d'un signe alphanumérique, ou de tout autre image distinctive.

A titre d'exemple de réalisation, ledit premier motif de sécurité 11 et ledit second motif de sécurité 12 peuvent représenter deux formes complémentaires aptes à former un élément de sécurité composite par juxtaposition du premier et du second élément de sécurité. Il peut s'agir notamment de caractères alphanumériques complémentaires formant ensemble une expression ou un code de sécurité unique.

En variante, les deux motifs de sécurité 11,12 peuvent être deux parties distinctes d'une image ou d'un logo, de sorte que la juxtaposition des deux éléments de sécurité graphique 11,12 permette de reconstituer l'image ou le logo complet.

Il est également possible, si la place disponible en périphérie de la zone des contacts 4,14 du module le permet, de réaliser deux ou davantage de seconds motifs de sécurité 12, complémentaires d'un premier motif de sécurité 11 disposé au centre du module.

Le surcroit de sécurité obtenu grâce à l'invention réside dans le fait que le second motif de sécurité 12 en relief par rapport au film diélectrique 1 est réalisé dès la fabrication du module. Et il serait très difficile de refaire un tel motif de sécurité 12 à postériori dans une zone 13 préalablement gravée de la périphérie du module, laissant apparaître le film diélectrique, car il est très difficile voire impossible de rajouter localement par laminage un second motif de sécurité métallique, alors que l'ensemble de la surface métallique du module est normalement obtenue en une seule opération de dépôt électrolytique, suivie d'une opération de gravure électrochimique.

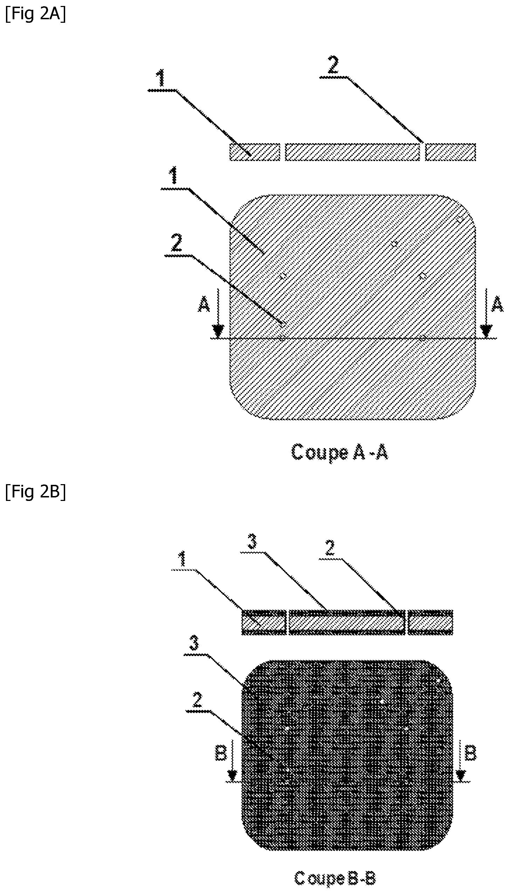

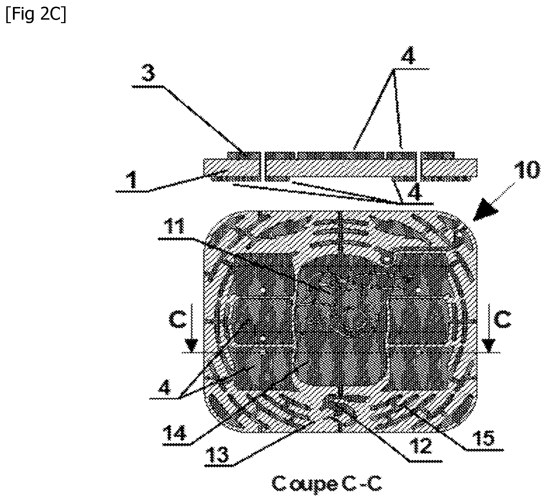

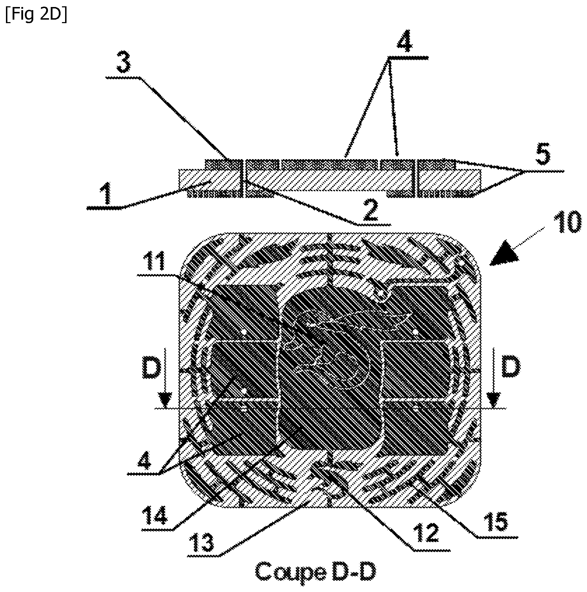

Le procédé permettant d'obtenir des motifs de sécurité 11, 12 sur le module électronique 10 selon l'invention va maintenant être décrit plus en détail en liaison avec la figure 2. On ne décrira pas les étapes liées au report et à la connexion de la puce 8, qui sont bien connues en elles-mêmes.

Comme représenté en figure 2A, on commence par approvisionner un film diélectrique 1, dans lequel on réalise des orifices traversants 2 qui seront plus tard métallisés pour former des vias reliant électriquement les deux faces du futur module.

Puis comme représenté en figure 2B, on dépose une première couche métallique 3 sur la face supérieure et sur la face inférieure du film diélectrique 1 en laissant ouverts lesdits orifices 2. Cela est typiquement réalisé par un dépôt électrolytique, typiquement de cuivre, sur les deux faces du film diélectrique.

Puis on procède à une gravure photochimique des surfaces métalliques pour délimiter des contacts 4,14,6 sur les faces du module. Sur la face supérieure, on enlève de la matière métallique de façon à délimiter des zones 4, 14, 15 restant métallisées, et des zones 13 laissant apparaître la surface supérieure du film diélectrique 1. Les zones métalliques conservées délimitent des zones fonctionnelles 4, 14 des contacts ISO 7816, à savoir 5 contacts 4 et une zone centrale 14 de masse électrique, et des zones métalliques 15 résiduelles purement décoratives et sans fonction particulière. Les différents contacts électriques fonctionnels 4, 14 sont dé-court-circuités entre eux du fait de la gravure électrochimique. Les zones métalliques décoratives 15 sont typiquement interconnectées entre elles et connectées à la zone centrale 14 de masse électrique.

Comme visible en figure 2C, le procédé selon l'invention comporte une étape consistant à réaliser à l'aide de la gravure électrochimique un premier motif de sécurité 11 en négatif obtenu par enlèvement de matière dans l'une desdites zones métalliques fonctionnelles 4, 14, et un second motif de sécurité 12 qui est un résidu métallique en relief et qui est situé en dehors des zones métalliques fonctionnelles 4, 14 formant les contacts électriques du bornier.

Selon un mode de réalisation représenté, le premier motif de sécurité 11 est réalisé dans la zone centrale 14 formant masse électrique. Ce premier motif de sécurité 11 est gravé notamment par un procédé photochimique enlevant la matière de la couche métallique jusqu'au niveau du film diélectrique 1, pour faire apparaitre en creux les contours du premier motif de sécurité 11 sur le film diélectrique, l'image d'une salamandre dans l'exemple représenté .

Le second motif de sécurité 12 est gravé simultanément en enlevant du métal dans la zone non fonctionnelle 13 périphérique à la zone des contacts ISO 4,14, de façon à faire apparaître en relief les contours dudit second motif de sécurité 12 sur le film diélectrique 1 en dehors des zones fonctionnelles 4, 14.

Ces opérations de gravure peuvent donc se faire simultanément de façon très efficace, alors qu'il serait très difficile voire impossible de réaliser un second motif 12 à postériori par ajout de matière dans le cadre d'une tentative de fraude. La même opération de gravure réalise donc une forme en creux 11 située au centre du module et une forme en relief 12 située en périphérie du module. La correspondance entre les deux motifs 11, 12 ainsi obtenus est choisie pour attester que les deux motifs sont des motifs de sécurité graphique réalisés par le fabricant officiel du module.

Comme représenté en figure 2D, il est possible de rajouter à postériori d'autres couches métalliques au-dessus de la première couche ce cuivre résiduelle, soit pour augmenter la résistance mécanique des contacts ISO, augmenter leur conductivité électrique, ou simplement pour améliorer leur aspect.

Ainsi, il est possible de rajouter par dépôt électrolytique une ou plusieurs couches en argent, or, nickel ou palladium. Le dépôt électrolytique permet de ne revêtir que les zones de cuivre restantes après la gravure (y compris le second motif de sécurité), sans impacter les zones préalablement gravées laissant apparaître la surface du film diélectrique 1.

### AVANTAGES DE L'INVENTION

L'invention atteint les buts fixés, et propose un nouveau procédé de réalisation d'un module électronique à contact ou mixte à contact et sans contact, pourvu d'au moins deux motifs de sécurité complémentaires dont la réalisation n'est possible dans de bonnes conditions techniques et économiques qu'au stade de la fabrication industrielle du module.

Les deux motifs de sécurité étant réalisés simultanément dans le cadre du procédé, l'un en creux dans la zone des contacts métalliques et l'autre en relief en dehors de cette zone, le procédé de fabrication selon l'invention permet à la fois une réalisation très simple et économique des modules sur les chaines de fabrication en volume, et une réalisation extrêmement difficile de manière artisanale à postériori.

Le surcroit de sécurité permis par l'invention vient du fait qu'un premier motif de sécurité est en creux par rapport à la couche métallique, alors que le second motif est en relief par rapport au diélectrique. Or il est très difficile voire impossible de frauder en rajoutant à postériori un second motif en relief sur un diélectrique qui initialement n'en comporterait pas. Cela serait impossible avec les procédés laser typiquement utilisés par les fraudeurs, car les lasers ne peuvent qu'enlever de la matière, pas en ajouter. Et il serait très difficile d'obtenir le même résultat que l'invention par des méthodes d'ajout à postériori d'un second motif par collage localisé de plusieurs couches métalliques sur une zone du diélectrique.

Par conséquent, le procédé selon l'invention permettent de renforcer substantiellement la résistance à la fraude de ces modules et des cartes à puce qui les portent.

En outre, les éléments de sécurité graphique étant réalisés à la surface visible du module électronique, ce module devient particulièrement simple à utiliser et à contrôler par une simple vérification visuelle à l'œil nu.

## Revendications

1. Procédé de réalisation de motifs de sécurité (11,12) sur un module électronique (10) pour document de sécurité, comportant des étapes consistant à :
- Approvisionner un film diélectrique (1) ;
- Réaliser des orifices traversants (2) dans le film diélectrique (1) ;
- Déposer au moins une couche métallique (3) sur la face supérieure et la face inférieure du film diélectrique (1) en laissant ouverts lesdits orifices (2);
- Délimiter par gravure d'une part un ensemble de zones métalliques fonctionnelles (4,14) comportant une zone centrale (14) formant masse électrique et un ensemble de contacts électriques (4) séparés entre eux et séparés de la masse électrique par des zones non métallisées laissant apparaître le film diélectrique (1), et d'autre part un ensemble de zones non fonctionnelles ou décoratives (15)
- **caractérisé en ce qu'**il comporte une étape consistant à réaliser simultanément par une opération de gravure un premier motif de sécurité (11) en creux obtenu par enlèvement de matière dans l'une desdites zones métalliques fonctionnelles (4,14), et un second motif de sécurité (12) en relief par rapport au film diélectrique (1) et obtenu par enlèvement de matière dans une zone située en dehors desdites zones métalliques fonctionnelles (4,14) formant les contacts électriques (4,14) du bornier.

2. Procédé selon la revendication 1, **caractérisé en ce que** ledit premier motif de sécurité (11) est réalisé dans la zone centrale (14) formant masse électrique.

3. Procédé selon la revendication 1 ou la revendication 2, **caractérisé en ce que** ledit premier motif de sécurité (11) est réalisé par une étape de gravure photochimique enlevant ladite au moins une couche métallique pour faire apparaitre en creux les contours dudit premier motif de sécurité (11) sur le film diélectrique (1).

4. Procédé selon l'une des revendications 1 à 3, **caractérisé en ce que** ledit second motif de sécurité (12) est obtenu par gravure photochimique enlevant localement ladite au moins une couche métallique pour faire apparaître en relief les contours dudit second motif de sécurité (12) sur le film diélectrique (1) en dehors desdites zones fonctionnelles (4,14).

5. Procédé selon l'une des revendications précédentes, **caractérisé en ce qu'**il comporte une étape complémentaire de dépôt électrolytique d'au moins une couche métallique supplémentaire d'argent, d'or, de nickel ou de palladium.

## Patentansprüche

1. Verfahren zum Herstellen von Sicherheitsmustern (11,12) auf einem elektronischen Modul (10) für ein Sicherheitsdokument, umfassend die folgenden Schritte:
- Bereitstellen einer dielektrischen Folie (1);
- Herstellen von Durchgangsöffnungen (2) in der dielektrischen Folie (1);
- Abscheiden mindestens einer Metallschicht (3) auf die Oberseite und die Unterseite der dielektrischen Folie (1), wobei die Öffnungen (2) offen bleiben;
- Abgrenzen durch Ätzen einerseits einer Reihe von funktionellen Metallbereichen (4, 14) mit einem zentralen Bereich (14), der eine elektrische Masse bildet, und einer Reihe von elektrischen Kontakten (4), die voneinander getrennt und durch nicht metallisierte Bereiche von der elektrischen Masse getrennt sind, die die dielektrische Folie (1) erscheinen lassen, und andererseits einer Reihe von nicht funktionellen oder dekorativen Bereichen (15)
- **dadurch gekennzeichnet, dass** er einen Schritt umfasst, der darin besteht, gleichzeitig durch einen Ätzvorgang ein vertieftes erstes Sicherheitsmuster (11), das durch das Entfernen von Material in einem der funktionellen Metallbereiche (4, 14) erhalten wird, und ein zweites Sicherheitsmuster (12) herzustellen, das gegenüber der dielektrischen Folie (1) erhaben ist und durch das Entfernen von Material in einem Bereich erhalten wird, der außerhalb der funktionellen Metallbereiche (4, 14) liegt, die die elektrischen Kontakte (4, 14) der Klemmleiste bilden.

2. Verfahren nach Anspruch **1, dadurch gekennzeichnet, dass** das erste Sicherheitsmuster (11) in dem zentralen Bereich (14), der eine elektrische Masse bildet, ausgeführt wird.

3. Verfahren nach Anspruch 1 oder Anspruch 2, **dadurch gekennzeichnet, dass** das erste Sicherheitsmuster (11) durch einen photochemischen Ätzschritt hergestellt wird, bei dem die mindestens eine Metallschicht entfernt wird, um die Konturen des ersten Sicherheitsmusters (11) auf der dielektrischen Folie (1) vertieft erscheinen zu lassen.

4. Verfahren nach einem der Ansprüche 1 bis **3, dadurch gekennzeichnet, dass** das zweite Sicherheitsmuster (12) durch photochemisches Ätzen erhalten wird, indem die mindestens eine Metallschicht lokal entfernt wird, um die Konturen des zweiten Sicherheitsmusters (12) auf der dielektrischen Folie (1) außerhalb der funktionellen Bereiche (4, 14) erhaben erscheinen zu lassen.

5. Verfahren nach einem der vorhergehenden Ansprüche, **dadurch gekennzeichnet, dass** es einen zusätzlichen Schritt des elektrolytischen Abscheidens mindestens einer zusätzlichen Metallschicht aus Silber, Gold, Nickel oder Palladium umfasst.

## Claims

1. A method for producing security patterns (11, 12) on an electronic module (10) for a security document, comprising steps consisting in :
- supplying a dielectric film (1) ;
- producing through holes (2) in the dielectric film (1);
- depositing at least one metal layer (3) on the upper side and the lower side of the dielectric film (1), leaving said holes (2) open;
- delimiting by etching, on the one hand, a set of functional metal zones (4, 14) comprising a central zone (14) forming an electrical ground and a set of electrical contacts (4) separated from one another and separated from the electrical ground by non-metallized zones letting the dielectric film (1) show and, on the other hand, a set of non-functional or decorative zones (15) and
- **characterized in that** it comprises a step consisting in simultaneously producing, by an etching operation, a debossed first security pattern (11) obtained by removing material from one of said functional metal zones (4, 14) and a second security pattern (12) embossed with respect to the dielectric film (1) and obtained by removing material from a zone located outside said functional metal zones (4, 14) forming the electrical contacts (4, 14) of the terminal block.

2. The method according to claim 1, **characterized in that** wherein said first security pattern (11) is produced in the central zone (14) forming an electrical ground.

3. The method according to claim 1 or 2, **characterized in that** said first security pattern (11) is produced by a photochemical etching step removing said at least one metal layer in order to make the contours of said first security pattern (11) appear debossed on the dielectric film (1).

4. The method according to any one of claims 1 to 3, **characterized in that** said second security pattern (12) is obtained by photochemical etching locally removing said at least one metal layer in order to make the contours of said second security pattern (12) appear embossed on the dielectric film (1) outside said functional zones (4, 14).

5. The method according to any one of the preceding claims, **characterized in that** it comprises a complementary step of electrolytically depositing at least one additional silver, gold, nickel or palladium metal layer.
